# EUROPEAN PATENT APPLICATION

(11) **EP 4 170 858 A1**
(43) Date of publication of application: **26.04.2023**
(21) Application number: 22202220.4
(22) Date of filing: 18.10.2022
(51) Int. Cl.: H02J 7/00, H02J 7/34

(54) **INTERFACE DEVICE FOR TRANSFERRING ELECTRICAL CHARGE**

(30) Priority: 21.10.2021 IT 202100027050
(71) Applicant: Rei Lab S.r.l., 42122 Reggio Emilia (IT)
(72) Inventor: ESPOSITO CORCIONE, Giuseppe, 80128 Napoli (IT); BRANCHETTI, Federico, 42020 Montecavolo (RE) (IT)
(74) Representative: Corradini, Corrado

(57) **Abstract**

An interface device (25) for transferring electrical charge is described, comprising:
- an input electrical port (30) adapted to be electrically connected to a supply battery (B1) of an electrical/electronic source device (15),
- an output electrical port adapted to be electrically connected to a supply battery (B2) of an electrical/electronic receiving device (20),
- a driving circuit (45) interposed between the input electrical port (30) and the output electrical port, the driving circuit (45) being operable between a first configuration in which it electrically connects the input electrical port (30) and the output electrical port, and a second configuration in which it electrically disconnects the input electrical port (30) and the output electrical port (35,40),
- an electronic control and command unit (65) operatively connected to the driving circuit (45), said electronic control and command unit (65) being configured to operate the driving circuit (45) in the first configuration so as to transmit electrical charge from the electrical/electronic source device (15) to the electrical/electronic receiving device (20) following the reception of a preset/predetermined authorisation signal.

## Description

### Technical field

The present invention concerns the field of battery recharging systems.

In particular, the invention concerns an interface device for transferring electrical charge between a source device and a receiving device.

### Prior art

Nowadays, portable, battery-supplied electrical/electronic devices are increasingly present in all areas of technology.

In particular, in addition to the very common smartphones and tablets, e-mobility, where electric scooters, pedal-assisted bicycles, e-bikes and the like are gaining ground, is becoming increasingly important.

Although these electrical/electronic devices outlined above are particularly convenient as they are portable thanks to the battery, they are at the same time limited in their operation by the charge level of the same battery.

As a result, sometimes the charge level is not high enough to allow using the electrical/electronic device, and if one does not have a battery charger and/or one is in a place with no electrical sockets, recharging the electrical/electronic device will not be possible. An object of the present invention is, therefore, to solve said drawbacks of the prior art. Another object is that of achieving such objective within the context of a rational, efficacious and cost-effective solution.

These objects are achieved by the characteristics of the invention reported in the independent claims. The dependent claims outline preferred and/or particularly advantageous aspects of the invention.

### Disclosure of the invention

The invention, in particular, makes available an interface device for transferring electrical charge (i.e. of electrical energy), comprising:
- an input electrical port adapted to be electrically connected to a supply battery of an electrical/electronic source device,
- an output electrical port adapted to be electrically connected to a supply battery of an electrical/electronic receiving device,
- a driving circuit interposed between the input electrical port and the output electrical port, the driving circuit being operable between a first configuration in which it electrically connects the input electrical port and the output electrical port, and a second configuration in which it electrically disconnects the input electrical port and the output electrical port,
- an electronic control and command unit operatively connected to the driving circuit, said electronic control and command unit being configured to operate the driving circuit in the first configuration so as to transmit electrical charge from the electrical/electronic source device to the electrical/electronic receiving device following the reception of a predetermined authorisation signal.

Thanks to this solution, the invention makes available an alternative possibility of recharging the applicable electrical/electronic device substantially basically anywhere where two electrical/electronic devices are present, thanks to the interface device that allows the connection between two battery-supplied electrical/electronic devices for the transfer of electrical charge between them. Furthermore, the application of the interface device to self-propelled electric vehicles, makes a network of electrical energy sources scattered throughout the territory, outside the dwellings, available and easily accessible. Furthermore, thanks to the interface device according to the invention, the transfer of charge between the electrical/electronic source device and the electrical/electronic receiving device takes place only with an authorisation, thus allowing a controlled transfer of the electrical charge, i.e. of the electrical energy (flow of electrical charges that move from the electrical/electronic source device to the electrical/electronic receiving device), thus avoiding thefts of electrical energy.

Furthermore, it is not excluded that in addition to this authorisation, a further confirmation of this authorisation by the owner of the electrical/electronic source device could be provided before switching the driving circuit.

Another aspect of the invention provides that said preset/predetermined authorisation signal may be a wireless signal.

In this way it is not necessary to provide for the presence of locks or magnetic card readers (possible command devices) that could be tampered with more easily than a wireless device.

A further aspect of the invention provides that said preset/predetermined authorisation signal may comprise an alphanumeric code.

Further, the authorisation signal, i.e. the alphanumeric code, may comprise an identification code.

Thanks to this solution, the authorisation signal can contain information uniquely associated with a user so that the interface device can identify who is withdrawing the electrical charge.

Another aspect of the invention provides that the interface device may comprise a first output electrical port and a second output electrical port, and that the driving circuit may comprise a first processing stage electrically connected to the input electrical port and to the first output electrical port and configured to make available at the first output electrical port a first supply voltage, and a second processing stage electrically connected to the input electrical port and to the second output electrical port and configured to make available at the second output electrical port a second supply voltage greater than the first supply voltage.

Thanks to this solution, the interface device allows the transfer of electrical charge even among electrical/electronic devices whose supply battery has different voltages.

Still another aspect of the invention provides that the first supply voltage may be equal to 5 V.

Thanks to this solution, in particular, the connection device allows the transfer of electrical charge at a supply voltage that is particularly common in portable electrical/electronic devices, being particularly suitable for the transfer of electrical charge towards portable devices such as smartphones, tablets and the like.

A further aspect of the invention provides that the second supply voltage can be equal to 36 V.

Thanks to this solution, in particular, the connection device allows the transfer of electrical charge at a supply voltage that is particularly common in electrical/electronic devices for electric mobility, particularly electric scooters and electric bicycles (e-bikes) or those with the so-called pedal assistance.

Still, a further aspect of the invention provides that the first output electrical port may be of the USB type.

Thanks to this solution, the interface device is particularly easy to connect to the electrical/electronic receiving device, as it simply requires a common and generally readily available cable with a USB socket.

Another aspect of the invention provides that the electronic control and command unit can be configured to detect at least one parameter indicative of the amount of electrical charge (energy) transmitted from the electrical/electronic source device to the electrical/electronic receiving device.

Thanks to this solution, the electronic control and command unit monitors the transmitted electrical charge which can be used to calculate a cost to be charged to the user/owner of the electrical/electronic receiving device for the recharging service.

Still, another aspect of the invention provides that the electrical/electronic source device may be an electric vehicle, and that the connection device may comprise an electrical connector associated with the input electrical port, said electrical connector being configured to connect to a recharging socket of the supply battery of the electric vehicle. Thanks to this solution, the connection device is configured to directly connect to the recharging socket of the electric vehicle already set up in the same, exploiting the electric connection already in place in the electric vehicle between the recharging socket and the supply battery of the vehicle, thus in an ease manner and obviating the need for complicated manoeuvres and/or electrical connection architectures. In addition, as mentioned above, this makes it possible to create a network of electrical sources easily available on the streets and in car parks, places where such electric vehicles can be parked, thus making it possible to recharge an electrical/electronic device even in places where power outlets connected to the (public) electricity grid are usually not present.

A further aspect of the invention provides that the electronic control unit can be configured to:
- detect a charge level value of the supply battery of the source device,
- compare the detected value with a threshold value,
- if the detected value is greater than the threshold value and the predetermined activation signal is detected, operate the driving circuit in the first configuration to allow the electrical communication between the input electrical port and the output electrical port for transmission of the electrical charge from the battery of the source device to the battery of the receiving device.

Thanks to this solution, the interface device is configured so as to transmit the electrical charge from the electrical/electronic source device to the electrical/electronic receiving device, while allowing to maintain a charge level of the supply battery of the electrical/electronic source device suitable for its operation, particularly suitable for maintaining a predetermined level of autonomy (or travel in terms of kilometres) of the electrical/electronic source device.

The invention still makes available an interface apparatus for transferring electrical charge comprising an interface device according to one or more of the aspects highlighted above, and a command device configured to send the predetermined/preset authorisation signal. Another aspect of the invention provides that the electronic control unit can be configured to connect to the control device via wireless technology, preferably via Bluetooth technology.

Thanks to this solution, the connection device is able to connect to the command device via wireless technology, thus obviating the need for cables, thanks to a solid and robust communication technology, and which moreover works in any area where the electrical/electronic source and receiving device, the connection device and the command device are located.

Another aspect of the invention provides that the interface apparatus may comprise a self-propelled electric vehicle with an electric battery, adapted to act as an electrical/electronic source device.

Thanks to this solution, the invention makes it possible to use an electric vehicle as a recharging station from which to withdraw electrical charge.

In particular, in case an electrical/electronic device, for example a smartphone or tablet or another electric vehicle, needed recharging and one were in an area without power outlets, the apparatus allows recharging said electrical/electronic device by means of the electric vehicle itself.

Still another aspect of the invention provides that the self-propelled electric vehicle can be selected from the group among an electric bicycle, a pedal-assisted bicycle, an electric scooter and an electric tricycle.

As mentioned above, this makes it possible to create a network of electrical sources easily available on the streets and in car parks, places where such electric vehicles can be parked, thus making it possible to recharge an electrical/electronic device even in places where power outlets connected to the (public) electricity grid are usually not present. In particular, this specific group of electric vehicles makes it possible to make said network of electrical energy sources available even in areas closed to motor vehicle and motorcycle traffic.

The invention further provides a method for recharging the supply battery of an electrical/electronic device from the supply battery of a self-propelled electric vehicle, said method comprising the steps of:
- having an electrical/electronic receiving device with a corresponding supply battery,
- having an interface device according to one or more of the aspects highlighted above, for electrically connecting the battery of the self-propelled electric vehicle to the supply battery of the electrical/electronic receiving device,
- starting the transmission of electrical charge between the supply battery of the electric vehicle and the supply battery, through the interface device, following the reception of a predetermined authorisation signal.

Thanks to this solution, the invention makes available an alternative recharging method to those currently available in the prior art, and which allows a control over the transfer of charge by the owner of the electrical/electronic source device, obviating the possibility of an unauthorised transfer.

Another aspect of the invention provides that the source device may be an electric vehicle.

Thanks to this solution, the method particularly allows the transfer of charge between an electric vehicle, particularly an electric scooter or electric bicycle or pedal-assisted bicycle, and an electric/electronic receiving device, effectively transforming the electric vehicle into a recharging station when needed.

### Brief Description of the Figures

Further features and advantages of the invention will be more apparent after reading the following description provided by way of a non-limiting example, with the aid of the figures illustrated in accompanying tables.

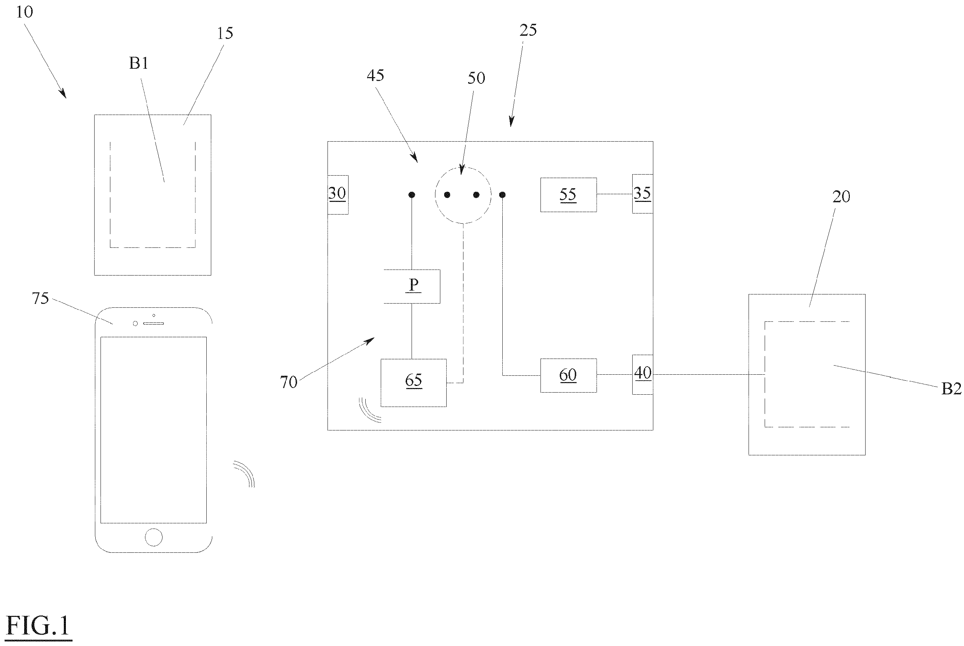

Figure 1 is a view of an interface apparatus according to the invention in which a driving circuit is operated in a first configuration.

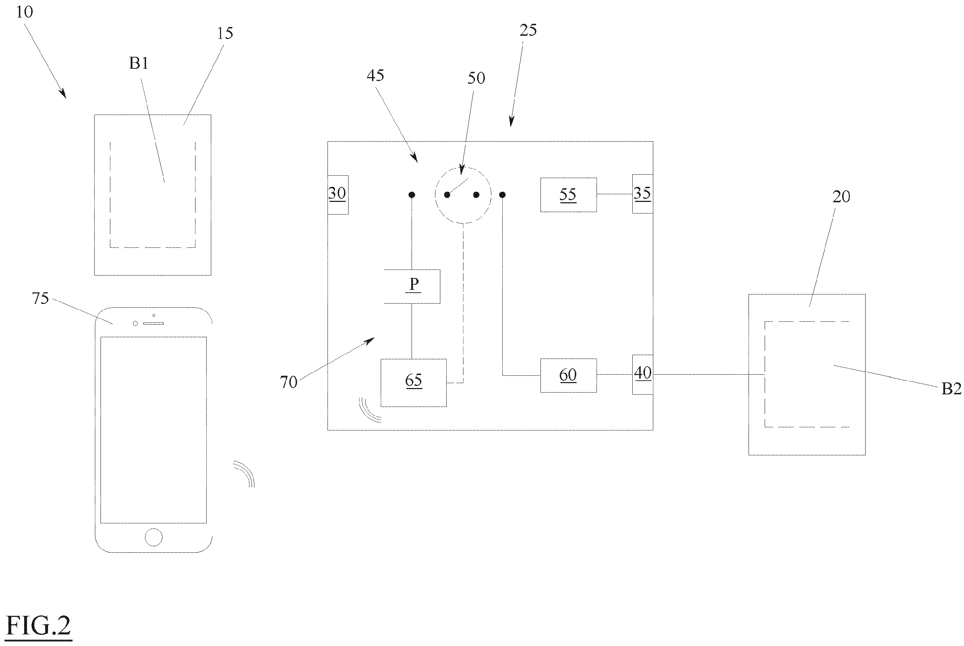

Figure 2 is a view of the interface apparatus of Figure 1 in which the driving circuit is operated in a second configuration.

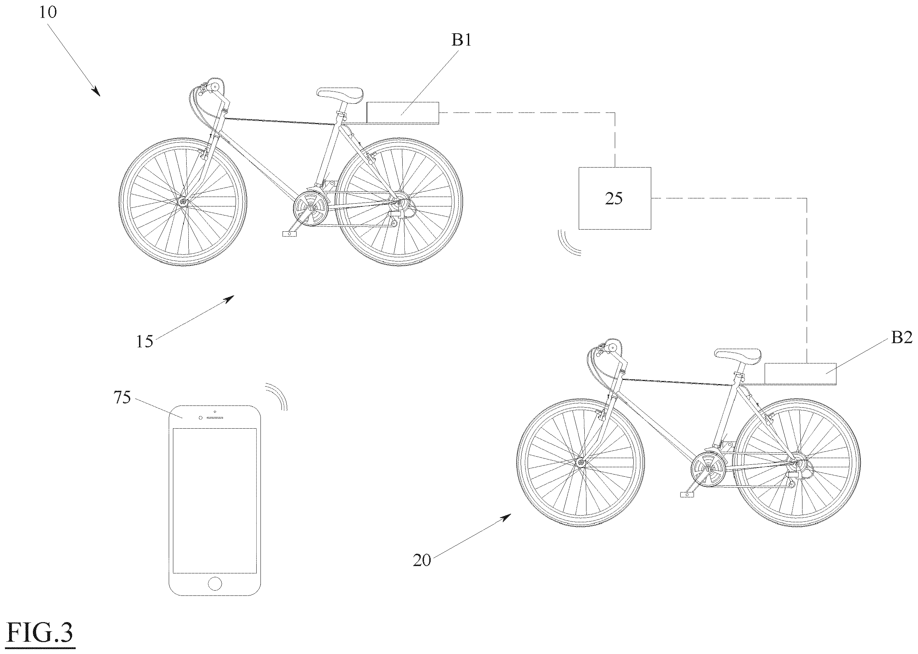

Figure 3 is a view of an embodiment of an interface apparatus and of an electrical/electronic receiving device connected to the interface apparatus.

### Detailed description

With particular reference to these figures, it has been indicated globally with 10 an interface apparatus (or also recharging apparatus) for the transfer of electrical charge between the supply battery B1 of an electrical/electronic source device 15 and the supply battery B2 of an electrical/electronic receiving device 20, i.e. for the transfer of electrical energy (i.e. a flow of electrical charges, which define an electric current, and which move from the electrical/electronic source device 15 to the electrical/electronic receiving device 20), so as to allow recharging the supply battery B2 of the electrical/electronic receiving device 20.

Particularly, as will be better seen below, the interface apparatus 10 is configured to allow the transfer of electrical charge, i.e. a flow of electrical charges, from the electrical/electronic source device 15 to the electrical/electronic receiving device 20 under controlled conditions, i.e. only after the consent of the owner of the electrical/electronic source device 15.

The interface apparatus 10 firstly comprises an interface device 25 configured to physically transmit the electrical charge (i.e. the electrical energy defined by the flow of electrical charges) from the electrical/electronic source device 15 to the electrical/electronic receiving device 20.

In particular, the interface device 25, as will be better seen below, is configured to selectively make the electrical connection between the supply battery B1 of the electrical/electronic source device 15 and the supply battery B2 of the electrical/electronic receiving device 20 for the transfer of an electric current from the first one to the second one.

In other words, the interface device 25 makes available a physical path for the electric current (i.e. for the displacement of the electrical charges from the electrical/electronic source device 15 to the electrical/electronic receiving device 20) that flows from the electrical/electronic source device 15 to the electrical/electronic receiving device 20 (due to the difference in potential between the two) making it possible to transfer electrical charges and, therefore, to recharge the supply battery B2 of the electrical/electronic receiving device 20.

The supply battery B1 preferably has a voltage greater than 24 V, for example from 24 V to 40 V, preferably from 28 V to 36 V.

The interface device 25 comprises an input electrical port 30 adapted to be electrically connected (preferably in wired mode, i.e. by cables) to the supply battery B1 of the electrical/electronic source device 15.

The interface device 25 then comprises at least one output electrical port adapted to be electrically connected (in wired mode, i.e. by cables) to the supply battery B2 of the electrical/electronic receiving device 20. However, it is not excluded that in an embodiment not illustrated, the output electrical port may be an electrical circuit for the wireless electric recharging of the supply battery B2.

Preferably, the interface device 25 comprises two output electrical ports of which a first output electrical port 35 and a second output electrical port 40, each of which can be connected to the supply battery B1 of a respective electrical/electronic receiving device 20.

For example, the first output electrical port 35 may be of the (standard) USB type.

The interface device 25 again comprises a driving circuit 45 interposed between the input electrical port 30 and the output electrical port, for example interposed between the input electrical port 30 and the first output electrical port 35 and between the input electrical port 30 and the second output electrical port 40.

The driving circuit 45 is, in particular, operable between a first configuration in which it electrically connects the input electrical port 30 and the output electrical port (i.e., the first output electrical port 35 and the second output electrical port 40), and a second configuration in which it electrically disconnects the input electrical port 30 and the output electrical port (i.e., the first output electrical port 35 and the second output electrical port 40). In other words, the driving circuit 45 in the first configuration allows the electrical passage of electric current (i.e., displacing electrical charges) between the input electrical port 30 and the output electrical port, i.e., between the input electrical port 30 and the first output electrical port 35 and between the input electrical port 30 and the second output electrical port 40.

In such a first configuration, basically, when the output electrical port is electrically connected to the supply battery B1 of the electrical/electronic source device 15 and the output electrical port is electrically connected to the supply battery B2 of the electrical/electronic receiving device 20, i.e. at least one of the first output electrical port 35 and the second output electrical port 40 is connected to the supply battery B2 of an electrical/electronic receiving device, the interface device 25 allows the transfer of electrical charge from the electrical/electronic source device 15 to the electrical/electronic receiving device.

In other words, when the output electrical port is electrically connected to the supply battery B1 of the electrical/electronic source device 15 and the output electrical port is electrically connected to the supply battery B2 of the electrical/electronic receiving device 20 (i.e. at least one of the first output electrical port 35 and the second output electrical port 40 is connected to the supply battery B2 of an electrical/electronic receiving device 20), and the driving circuit 45 is in the first configuration, the supply battery B1 of the electrical/electronic source device 15, the driving circuit 45 and the supply battery B2 of the electrical/electronic receiving device 20 together define a closed electrical circuit.

In the second configuration, the driving circuit 45 prevents any passage of electric current between the input electrical port 30 and the output electrical port, i.e., between the input electrical port 30 and the first output electrical port 35 and between the input electrical port 30 and the second output electrical port 40.

In such a second configuration, basically, even when the output electrical port is electrically connected to the supply battery B1 of the electrical/electronic source device 15 and the output electrical port is electrically connected to the supply battery B2 of the electrical/electronic receiving device, i.e. at least one of the first output electrical port 35 and the second output electrical port 40 is connected to the supply battery B2 of an electrical/electronic receiving device, the interface device 25 prevents the transfer of electrical charge from the electrical/electronic source device 15 to the electrical/electronic receiving device 20.

In other words, even when the output electrical port is electrically connected to the supply battery B1 of the electrical/electronic source device 15 and the output electrical port is electrically connected to the supply battery B2 of the electrical/electronic receiving device (i.e. at least one of the first output electrical port 35 and the second output electrical port 40 is connected to the supply battery B of an electrical/electronic receiving device), if the driving circuit 45 is in the second configuration, the supply battery B1 of the electrical/electronic source device 15, the driving circuit 45 and the supply battery B2 of the electrical/electronic receiving device 20 together define an open electrical circuit.

For example, the driving circuit 45 may comprise an electrical switch 50 interposed between the input electrical port 30 and the output electrical port (e.g., between the input electrical port 30 and the first and second output electrical ports), i.e., downstream of the input electrical port 30 and upstream of the (first and second) output electrical port.

The switch is therefore operable between a closed configuration, corresponding to the first configuration of the driving circuit 45, in which it allows the passage of current between upstream and downstream of the switch itself, and an open position, corresponding to the second configuration of the driving circuit 45, in which it realizes an open circuit and prevents any passage of current from upstream to downstream of the switch itself. The driving circuit 45 may further be configured to process the electric current it receives from the supply battery B1 of the electrical/electronic source device 15, so as to vary its voltage and/or amperage.

Basically, the driving circuit 45 receives, through the input electrical port 30, electrical charges in the form of an electric current at a voltage and/or amperage depending on the electrical characteristics of the supply battery B1 of the electrical/electronic source device 15, and the driving circuit 45 is configured to process this electric current so as to make available at the output electrical port the electrical charges received in the form of an electric current at a different voltage and/or amperage, particularly in the form of an electric current having voltage and/or amperage characteristics that are appropriate to the electrical characteristics of the supply battery B2 of the electrical/electronic receiving device 20.

In particular, the driving circuit 45 may comprise a first processing stage 55 electrically connected to the input electrical port 30 and to the first output electrical port 35 and configured to make available at the first output electrical port 35 the electric current (defined by the electrical charges moving from the electrical/electronic source device 15 towards the electrical/electronic receiving device 20) at a first supply voltage.

Particularly, this first processing stage 55 can be a low voltage conversion stage, i.e., a step-down voltage converter (also called a buck converter), i.e., it receives an electric current input at a voltage value and provides an electric current output at a voltage value lower than the input value.

Particularly, the first supply voltage is preferably substantially equal to 5 V.

Thanks to this solution, in particular, the interface device 25 allows the transfer of electrical charges at a supply voltage that is particularly common in portable electrical/electronic devices, being in particular suitable for the transfer of charge from the electrical/electronic source device 15 towards an electrical/electronic receiving device 20 such as for example a smartphone or a tablet and the like.

The first processing stage 55 may be, in particular, arranged downstream of the switch in the flowing direction of the electric current from the input electrical port 30 towards the output electrical port, i.e. from the input electrical port 30 towards the first output electrical port 35.

The driving circuit 45 may then comprise a second processing stage 60 electrically connected to and interposed between the input electrical port 30 and the second output electrical port 40, which is configured to make a second supply voltage, for example greater than the first supply voltage, available at the second output electrical port 40. Particularly, said second processing stage 60 is a boost stage (so-called booster) or amplifier or step-up voltage converter, that is, it receives electric current input (defined by the electrical charges moving from the electrical/electronic source device 15 towards the electrical/electronic receiving device 20) at a voltage value and provides said electric current output at a voltage value greater than that the input value.

Particularly, the second supply voltage is preferably 36 V.

Thanks to this solution, in particular, the connection device allows the transfer of electrical charge at a supply voltage that is particularly common in electrical/electronic devices for electric mobility, particularly electric scooters and electric bicycles (e-bikes) or the so-called pedal-assisted bicycle.

The second processing stage 60 may be, in particular, arranged downstream of the switch in the flowing direction of the current (defined by the electrical charges moving from the electrical/electronic source device 15 towards the electrical/electronic receiving device 20) from the input electrical port 30 towards the output electrical port, i.e. from the input electrical port 30 towards the second output electrical port 40.

The interface device 25 again comprises an electronic control and command unit 65, provided with a memory unit (volatile and/or non-volatile, for example RAM and/or ROM), configured to manage the operation of the interface device 25 as will be better seen below.

The electronic control and command unit 65 may itself be adapted to be supplied by the supply battery B1 of the electrical/electronic source device 15.

More precisely, the electronic control and command unit can be supplied by the supply battery B1 of the electrical/electronic source device 15, through the interface device 25. In particular, the interface device 25 may comprise a dedicated supply circuit 70 adapted to connect the electronic control and command unit 65 to the input electrical port 30 so as to transmit thereto the electric current arriving from the supply battery B1 of the electrical/electronic source device 15.

For example, such a dedicated supply circuit 70 may comprise a dedicated processing stage P adapted to provide the electronic control and command unit 65 with electric current at a supply voltage value suitable for supplying the same.

For example, such a dedicated processing stage P may be a low voltage conversion stage, i.e., step-down voltage converter (also called buck converter), i.e., it receives electric current input at a voltage value (depending on the supply battery B of the electrical/electronic source device 15) and provides electric current output at a voltage value lower than the input value.

Particularly, this supply voltage value of the electronic control and command unit 65 is preferably substantially equal to 5 V.

The electronic control and command unit 65 is operatively connected to the driving circuit 45 and configured to selectively operate the same between the first configuration and the second configuration.

More precisely, the electronic control and command unit 65 is configured to operate the driving circuit 45 in the first configuration so as to transmit electrical charge(s) from the electrical/electronic source device 15 to the electrical/electronic receiving device 20 (only) following the reception of a preset/predetermined authorisation signal, as will be better described below.

For example, the electronic control and command unit 65 may be operatively connected to the switch of the driving circuit 45, and configured to selectively operate the switch between the open configuration and the closed configuration.

More precisely, the electronic control and command unit 65 may be configured to, (only) following the reception of the authorisation signal, switch the switch into the closed configuration, so as to operate the driving circuit 45 in the first configuration.

The interface apparatus 10 may therefore comprise a command device 75 configured to send said authorisation signal, and the electronic control and command unit 65 is configured to receive said authorisation signal from the command device 75.

In particular, such an authorisation signal may comprise an alphanumeric code.

In particular, this code may be the identifier of an identity of the command device 75 and/or in any case identifier of a user (and/or owner) of the electrical/electronic receiving device 20 provided with (owning) the command device 75.

This authorisation signal can therefore uniquely identify the user who wishes to withdraw the electrical charge from the supply battery B1 of the electrical/electronic source device 15.

In particular, the electronic control and command unit 65 may be configured to compare the code detected by the command device 75 with a plurality of codes that are preset and saved in the memory unit and, if the code detected corresponds to one of the codes present in the memory unit, identify the reading of such code as said authorisation signal and subsequently operate the driving circuit 45 in the first configuration.

Preferably, the command signal is a wireless signal, i.e. transmitted from the command device 75 to the electronic control and command unit 65 via wireless communication technology.

In other words, the command device 75 is provided with a wireless transmitter module, preferably Bluetooth, by means of which said authorisation signal is transmitted and the electronic control and command unit 65 is provided with a corresponding wireless receiver module, preferably Bluetooth, capable of receiving said authorisation signal transmitted by the transceiver module of the command device 75. In this case, the command device may for example be a smartphone or a device made ad hoc and provided with a wireless transmitter capable of transmitting the authorisation signal. In the case of a smartphone, the transmitter is generally a wireless transceiver.

Alternatively, the command device 75 could comprise an electronic key, for example a magnetic card, uniquely associated with a user and provided with a NCF (Near Field Communication) or RFID transceiver module capable of transmitting the authorisation signal, and the electronic control and command unit 65 can be provided with a corresponding NCF (Near Field Communication) or RFID transceiver module capable of reading the electronic key.

In yet another embodiment, for example, such a command device 75 may be an element on which a barcode or a QR code or the like is imprinted, said code being uniquely associated with the user using the electrical/electronic receiving device 20, and the electronic control and command unit 65 may be provided with a reader capable of detecting said barcode or QR code.

Such a barcode or QR code may thus contain such an authorisation signal.

As mentioned above, the command device 75 can comprise a smart device such as for example a smartphone or tablet or PC, on which a graphical interface made available by a computer application installed or remotely accessible from the smart device and managed by a remote server (i.e. a computer) is available (not illustrated in the figures). The command device 75 and the electronic control and command unit 65 are thus configured to connect to such a server (e.g., via wireless technology), thereby defining a computing architecture in which the command device 75 is the so-called client device. It is not excluded that the electronic control and command unit 65 may be connected to the remote server, for example via the command device 75, and thus to be also able to exchange information with the remote server.

In particular, by means of this computer application, the command device 75 must first be registered on the server, thereby essentially creating a unique computer identity for the user of the command device 75 that allows the server to recognize it at each access after registration, for example by means of a respective username and a respective password. The computer application therefore comprises a computer code that when run, for example the first time it is run, permits the step of creating a unique computer identity and saving said unique computer unit on the command device 75 and/or on the remote server. The registration may include entering a plurality of data that uniquely identify the user of the command device 75, for example name and/or surname and/or tax code and/or at least an email address and/or a telephone number.

This registration also preferably includes entering a payment method, for example a credit card number and/or other reference that allows an amount of money to be charged to the user of the command device 75.

Once registered, through the interface the command device 75 communicates with the server its identity, and the server by matching the identity communicated by the command device 75 with those registered, automatically recognizes the command device 75 (that is, the user thereof by associating the data entered during registration with the username and password).

The interface device 25 may also be previously registered on the server, creating a unique computer identity for the interface device 25 to be stored on the server.

The registration may include entering a plurality of data that uniquely identify the interface device 25, for example name and/or surname and/or tax code and/or at least an email address and/or a telephone number of the owner of the electrical/electronic source device 15 to which the interface device 25 is adapted to connect.

This registration also preferably includes entering a method for collecting money, for example a credit card number and/or IBAN and/or other reference that allows an amount of money to be credited in favour of the owner of the electrical/electronic source device 15 to which the interface device 25 is adapted to connect.

Once registered, the interface device 25 will be selectable on the interface, for example it will be displayed in the form of a graphic icon that will appear on the interface.

More in detail, through the interface the command device 75 communicates with the server its identity, and the server by matching the identity communicated by the command device 75 with those registered, automatically recognizes the command device 75 (that is, the user thereof by associating the data entered during registration with the username and password).

At this point, through the interface, the command device 75 may select the interface device 25, for example from a list of interface devices stored on the server.

Once the interface device 25 is accessed and selected, the command device 75 is enabled to send the authorisation signal to the interface device.

In particular, the command device 75, can send said authorisation signal that is transmitted via wireless communication technology to the interface device, preferably via Bluetooth communication technology.

For example, following the selection of the interface device 25, a button (in the form of a graphic icon) is made available on the interface which, if pressed, allows said authorisation signal (wireless) to be sent to the interface device.

In practice, the computer application available on the command device 75 can act as an additional barrier (with respect to the physical barrier of the interface device), in this case a software barrier, which makes it possible to exchange electrical energy only between an electrical/electronic source device 15 and an electrical/electronic receiving device 20 registered on the application.

Alternatively or in addition to this configuration of the computer application, the electronic control and command unit 65 may be configured to measure a charge level (i.e., charge percentage) of the supply battery B1 of the electrical/electronic source device 15.

In such a case, the electronic control and command unit 65 may also be configured to operate the driving circuit 45 in the first configuration following the reception of the authorisation signal and only if a charge level of the supply battery B of the electrical/electronic source device 15 is greater than a predetermined threshold value.

In more detail, the electronic control unit may be configured to detect a charge level value of the supply battery B1 of the electrical/electronic source device 15, and to:
- compare the detected value with the predetermined threshold value,
- (only) if the detected value is greater than the threshold value and (only) if the authorisation signal is received, operate the driving circuit 45 (following reception of the authorisation signal) in the first configuration.

This threshold value can be preset or settable in the electronic control and command unit 65.

For example, this threshold value can be set using the graphical interface of the computer application managed by the remote server.

More in detail, the user using the and/or owner of the electrical/electronic source device 15, by means of a respective electronic device, for example smart such as a PC and/or a tablet and/or a smartphone, or an ad hoc electronic device, on which a graphical interface made available by a computer application (installed or otherwise accessible from the smart device and managed by the server) is available, for example the same one capable of sending the authorisation signal, can enter this threshold value that is stored on the server.

The electronic control and command unit 65 can also be configured, alternatively or in addition to allowing the battery of the receiving device to be recharged only if the battery of the donor device has a charge level higher than the preset threshold value, to detect at least one parameter indicative of the electrical charge (i.e., electrical energy) transmitted by the electrical/electronic source device 15 to the electrical/electronic receiving device 20.

For example, the electronic control and command unit 65 may be configured to calculate the percentage of battery charge obtained from the electrical/electronic receiving device 20 by the electrical/electronic source device 15 (i.e., thanks to the electrical charges transmitted from the electrical/electronic source device 15 to the electrical/electronic receiving device 20).

In other words, the electronic control and command unit 65 can be configured to continuously monitor the charge level of the supply battery B2 of the electrical/electronic receiving device 20, and to calculate the value of the charge percentage obtained from the electrical/electronic receiving device 20 starting from the electrical/electronic receiving device 20 as the difference between the value of the charge level at the end of recharging (i.e. immediately before the supply battery B2 of the electrical/electronic device was disconnected from the interface device 25) and the value of the charge level at the beginning of recharging (i.e. the charge level of the supply battery B2 when the electronic control unit detected the authorisation signal).

The electronic control and command unit 65 can therefore be configured to transmit, to the server or to the command device when this is a smart device, the value of said parameter indicative of the amount of electrical charge (i.e., the amount of electrical energy) sent to the electrical/electronic receiving device 20. In the event that the command device is not a smart device, the electronic control and command unit may communicate with the server the value of said parameter indicative of the amount of electrical charge by means of another smart device or directly with the server in the event that the interface device is provided with a modem.

The server or the remote device may be configured to calculate a cost to be charged to the user using the electrical/electronic receiving device 20 based on the battery percentage value obtained from the electrical/electronic receiving device 20 starting from the electrical/electronic source device 15, i.e., the amount of energy transmitted to the electrical/electronic receiving device 20.

The interface apparatus 10 may again comprise a self-propelled electric vehicle acting as the electrical/electronic source device 15.

Such a source electric/electronic vehicle is preferably an electric/electronic vehicle selected from the group among an electric bicycle, a pedal-assisted bicycle, an electric scooter and an electric tricycle.

In any case, the self-propelled electric vehicle comprises a frame, at least one pair of support and ground moving wheels, at least one electric motor driving at least one of the wheels (for example an electric motor associated with each wheel), and a supply battery B1 that supplies the at least one electric motor.

The supply battery B1 can be housed inside a special housing compartment made in the frame, and is also connected, as is known, to a recharging socket accessible from the outside of the self-propelled electric vehicle by means of which it can be connected to an electrical power socket, for example by means of a suitable battery charger, for electric recharging.

The interface device 25 can be installed, for example removably, on the self-propelled electric vehicle.

In particular, the interface device 25 may take the form of an additional module that is associated with the electric vehicle, for example post-production of the electric vehicle itself.

For example, the interface device 25 may comprise a box-like body adapted to contain the electronic control unit, the input electrical port 30, the output electrical port (e.g., the first output electrical port 35 and the second output electrical port 40), the driving circuit 45, and possibly (where present) the geolocation module and any other module possibly present of the interface device 25.

The interface device 25 can therefore be fixed on board the self-propelled electric vehicle, for example by means of the box-like body, by means of suitable fixing means.

For example, such fixing means may comprise adhesive means or screws and bolts or sealing strips or clamps or any other means suitable for the purpose of fixing the interface device 25 on board the self-propelled electric vehicle.

The interface device 25 may further comprise an electrical connector associated with the input electrical port 30, which is configured to be connected to the recharging socket of the supply battery B1 of the self-propelled electric vehicle, i.e. of the electrical/electronic source device 15.

Preferably, at least one of the interface device 25 and the self-propelled electric vehicle is geolocatable.

Such geolocation can occur statically or dynamically.

In static mode, geolocation occurs substantially manually.

That is, the user using the and/or owner of the self-propelled electric vehicle, by means of a respective smart device, for example a PC and/or a tablet and/or a smartphone, on which said graphical interface made available by the computer application installed or otherwise accessible from the smart device and managed by the remote server (i.e. a computer) is available, stores on the server the position of the interface device 25, i.e. of the self-propelled vehicle, manually entering the position (for example by entering the coordinates of the position or by selecting the position on a map made available by the graphical interface).

In this way, an owner of the electrical/electronic receiving device 20 can locate the position of the electrical/electronic receiving device 20 thanks to the geolocation information saved on the server (and by means of its own geolocation device).

In the dynamic geolocation mode, it is possible to provide that at least one of the interface device 25 and the self-propelled electric vehicle can comprise a geolocation device operatively connected to the electronic control and command unit 65, and that the electronic control and command unit 65 can be configured to send its position to the command device 75.

For example, the electronic control and command unit 65 may be configured to communicate its position to the server, and the server will make that position available on the command device 75 (i.e., on the interface available on the command device 75), for example in the form of alpha numeric coordinates or in the form of a graphic icon within a territorial map.

The operation of the invention is as follows.

Before the actual use of the interface device for recharging a receiving device, a first step of installing the interface device on the self-propelled vehicle acting as the electrical/electronic source device takes place, as the interface device is preferably configured as an additional module to be fixed thereto.

This installation envisages fixing the interface device 25, i.e. the protective casing of the interface device 25, to the self-propelled vehicle acting as the electrical/electronic source device, and the connection of the input electrical port 30 of the interface device 25 to the supply battery B1.

Subsequently, there may be a step of registering the identity of the owner of the electrical/electronic source device 15 on the remote server, useful for subsequent configurations and for the payment by the owner for the energy that his electrical/electronic source device 15 will deliver.

In this registration step, an (unique) identification code of the electrical/electronic source device 15, i.e. of the interface device 25, is associated with the identity of the owner entered in the server, through an appropriate user interface made available by any smart device provided with appropriate software.

At this step or even thereafter, the owner of the electrical/electronic source device 15 may set the charge threshold value below which it is not possible to withdraw further electrical energy from his electrical/electronic source device 15.

When the owner of the self-propelled vehicle, which acts as the electrical/electronic source device 15, parks his own self-propelled vehicle, he may make it, automatically or after his voluntary selection, available for recharging other vehicles.

In the event that the owner of the electrical/electronic source device 15 has to select the willingness to make it available for recharging, such willingness can be given through the owner sending to the server a geolocation information of the electrical/electronic source device 15 (in the event that the geolocation is not dynamic) or by an explicit consent through an application, i.e. the application described above, on a smart device to activate recharging.

In particular, in the latter case, the electronic control and command unit 65 can be configured to operate the driving circuit 45 in the first configuration if prior to the preset authorisation signal it has previously received a preset activation signal different from the authorisation signal (for example, also wireless like the authorisation signal and provided by an ad hoc management device or a smart management device on which the application is installed). Thanks to this activation signal, the electrical/electronic source device 15 becomes the one that can be enabled to provide electrical energy present in its supply battery.

The electronic control and command unit 65 may thus be configured to operate the driving circuit 45 in the first configuration if prior to the preset authorisation signal it has previously received a preset activation signal different from the authorisation signal and until it receives a preset deactivation signal (and/or until the preset threshold charge value is reached, whichever occurs first from a time perspective).

At this point, an owner of an electrical/electronic receiving device 20 can geolocate, for example via application on the command device 75 or on another smart device, the electrical/electronic source device 15 which can be enabled to provide electrical energy for recharging his own electrical/electronic receiving device. Alternatively, the owner of the electrical/electronic receiving device 20 may come across the electrical/electronic source device 15, but he will still have to verify via the application, or by attempting recharging, that the source device can be enabled to recharge.

To carry out this possible search by geolocating the electrical/electronic source device 15 and for its subsequent authorisation to recharge, the owner of the electrical/electronic receiving device 20 and of the command device 75, is required to have previously registered on the remote server through the appropriate software application.

Upon reaching the electrical/electronic source device 15, the owner of the electrical/electronic receiving device 20 connects the recharging (input supply) cable of his electrical/electronic receiving device 20 to the output port of the interface device 25. Subsequently, by means of the command device 75, it sends the authorisation signal to the electronic control and command unit 65, which switches the driving circuit to recharge the supply battery B2 of the electrical/electronic receiving device 20.

Once the supply battery B2 of the electrical/electronic receiving device 20 is recharged to the maximum or upon reaching the preset charge threshold level of the supply battery B1 of the electrical/electronic source device 15, the electronic control and command unit is configured to automatically interrupt the transmission of electrical energy by switching the driving circuit into the second configuration.

The driving circuit 45 is switched into the second configuration even if the input cable of the electrical/electronic receiving device 20 is physically disconnected by the owner from the interface device 25.

In this case, the electronic control and command unit 65 is configured to detect the presence of a receiving battery connected to the interface device 25, for example to monitor its charge level as explained above, and to switch the driving circuit 45 into the second configuration when it detects, after having previously detected the presence of a receiving battery, the lack of the receiving battery.

The electronic control and command unit 65 will provide, after switching in the second configuration of the driving circuit 45, to communicate to the remote server, for example by wireless connection with the command device 75 which then sends the data to the remote server or directly to the remote server in the event that the interface device 25 is provided with modem, the value of the parameter indicative of the amount of electrical energy transmitted to the electrical/electronic receiving device 20 (or directly the value of the amount if it is configured to calculate it).

Subsequently, based on the amount of electrical charge transferred, the server will charge the owner of the electrical/electronic receiving device 20 a monetary cost based on this amount of energy transferred and will send the money to the owner of the electrical/electronic source device 15.

The invention thus conceived is susceptible to many modifications and variants, all falling within the same inventive concept.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. Interface device (25) for transferring electrical charge, comprising:
- an input electrical port (30) adapted to be electrically connected to a supply battery (B1) of an electrical/electronic source device (15),
- an output electrical port adapted to be electrically connected to a supply battery (B2) of an electrical/electronic receiving device (20),
- a driving circuit (45) interposed between the input electrical port (30) and the output electrical port, the driving circuit (45) being operable between a first configuration in which it electrically connects the input electrical port (30) and the output electrical port, and a second configuration in which it electrically disconnects the input electrical port (30) and the output electrical port (35,40),
- an electronic control and command unit (65) operatively connected to the driving circuit (45),
said electronic control and command unit (65) being configured to operate the driving circuit (45) in the first configuration so as to transmit electrical charge from the electrical/electronic source device (15) to the electrical/electronic receiving device (20) following the reception of a predetermined authorisation signal.

2. Interface device (25) according to claim 1, wherein the predetermined authorisation signal is a wireless signal.

3. Interface device (25) according to any one of the preceding claims, wherein the preset authorisation signal contains an identification code.

4. Interface device (25) according to any one of the preceding claims, wherein the electronic control and command unit (65) is configured to:
- detect a charge level value of the supply battery (B1) of the electrical/electronic source device (15),
- compare the detected value with a threshold value,
- if the detected value is greater than the threshold value and the predetermined authorisation signal is detected, operate the driving circuit (45) in the first configuration to allow the electrical communication between the input electrical port (30) and the output electrical port for transmission of the electrical charge from the supply battery (B1) of the electrical/electronic source device (15) to the supply battery (B2) of the electrical/electronic receiving device (20).

5. Interface device (25) according to any one of the preceding claims, wherein the electronic control and command unit (65) is configured to detect at least one parameter indicative of the amount of electrical charge transmitted from the electrical/electronic source device (15) to the electrical/electronic receiving device (20).

6. The interface device (25) according to claim 1, wherein the interface device (25) comprises a first output electrical port (35) and a second output electrical port (40), and wherein the driving circuit (45) comprises a first processing stage (55) electrically connected to the input electrical port (30) and to the first output electrical port (35) and configured to make available at the first output electrical port (35) a first supply voltage, and a second processing stage (60) electrically connected to the input electrical port (30) and to the second output electrical port (40) and configured to make available at the second output electrical port (40) a second supply voltage greater than the first supply voltage.

7. The interface device (25) according to claim 6, wherein the first supply voltage is equal to 5 V.

8. The interface device (25) according to claim 6, wherein the second supply voltage is equal to 36 V.

9. Interface apparatus (10) for transferring electrical charge comprising the interface device (25) according to claim 1, and a command device (75) configured to send the preset authorisation signal.

10. Interface apparatus (10) according to the preceding claim, comprising a self-propelled electric vehicle acting as an electrical/electronic source device (15).

11. Interface apparatus (10) according to the preceding claim, wherein the self-propelled electric vehicle is selected from the group among an electric bicycle, a pedal-assisted bicycle, an electric scooter and an electric tricycle.

12. Method for recharging an electrical/electronic receiving device (20) from the supply battery (B1) of a self-propelled electric vehicle, said method comprising the steps of:
- having an electrical/electronic receiving device (20) provided with a corresponding supply battery (B2),
- having an interface device (25) for electrically connecting the supply battery (B1) of the self-propelled electric vehicle to the supply battery (B2) of the electrical/electronic receiving device (20),
- starting the transmission of electrical charge between the supply battery (B1) of the self-propelled electric vehicle and the supply battery (B2) of the electrical/electronic receiving device (20) following the reception of a predetermined authorisation signal.
